# EUROPEAN PATENT APPLICATION

(11) **EP 3 396 295 A1**
(43) Date of publication of application: **31.10.2018**
(21) Application number: 17168161.2
(22) Date of filing: 26.04.2017
(51) Int. Cl.: F28F 9/007, F16M 7/00, F28D 9/00

(54) **PLATE HEAT EXCHANGER**

(71) Applicant: Alfa Laval Corporate AB, 221 00 Lund (SE)
(72) Inventor: MELLIN, Sven, SE-223 55 LUND (SE)
(74) Representative: Alfa Laval Attorneys

(57) **Abstract**

A plate heat exchanger (2) comprising first and second end plates (4, 6), a lower bar (14, 66) extending from the first end plate (4) towards the second end plate (6), and a pack (8) of heat transfer plates (10) arranged between the first and second end plates and extending above the lower bar, is provided. The plate heat exchanger is characterized in that the lower bar (14, 66) comprises a groove (40, 82) having a length axis (L) which extends parallel to a longitudinal direction (I) of the lower bar (14, 66), and a depth axis (D) extending perpendicular to the length axis. The plate heat exchanger further comprises a support foot (42). An upper portion (56) of the support foot (42) is arranged to be received in the groove (40, 82) and a lower portion (59) of the support foot (42) is arranged to extend from the lower bar (14, 66) and contact the ground (18) to keep the lower bar at a distance from the ground. The upper portion (56) of the support foot (42) is arranged to be slidable in the groove (40, 82) along the length axis (L) to enable adjustment of a position of the support foot (42) along the lower bar (14, 66).

## Description

### TECHNICAL FIELD

The invention relates to a plate heat exchanger comprising first and second end plates, a lower bar extending from the first end plate towards the second end plate, and a pack of heat transfer plates arranged between the first and second end plates and extending above the lower bar.

### BACKGROUND ART

Plate heat exchangers, PHEs, typically consist of two end plates in between which a number of heat transfer plates are arranged in an aligned manner, i.e. in a stack or pack. In one type of well-known PHEs, the so called gasketed plate heat exchangers, gaskets are arranged between the heat transfer plates. The end plates, and therefore the heat transfer plates, are pressed towards each other by some kind of tightening means, whereby the gaskets seal between the heat transfer plates. Parallel flow channels are formed between the heat transfer plates, one channel between each pair of adjacent heat transfer plates. Two fluids of initially different temperatures, which are fed to/from the PHE through inlets/outlets, can flow alternately through every second channel for transferring heat from one fluid to the other, which fluids enter/exit the channels through inlet/outlet port holes in the heat transfer plates communicating with the inlets/outlets of the PHE.

The end plates of a gasketed plate heat exchanger are often referred to as frame plate and pressure plate. The frame plate is often fixed to a support surface such as the floor while the pressure plate is movable in relation to the frame plate. Often, an upper carrying bar for carrying the heat transfer plates, and possibly also the pressure plate, is fastened to the frame plate and extends from an upper part thereof, past the pressure plate and to a support column. Similarly, a lower guiding bar for guiding the heat transfer plates, and possibly also the pressure plate, to make sure that they are properly aligned, is fastened to the frame plate and extends from a lower part thereof, on a distance from the ground, past the pressure plate and to the support column. Typically, the carrying and guiding bars are hollow bars having fastening plates welded to their ends such that the fastening plates at least partly closes the open ends of the carrying and guiding bars. The carrying and guiding bars are fastened to the frame plate and support column by means of bolts extending through matching holes in the frame plate and support column and the fastening plates welded to the carrying and guiding bars. The heat transfer plates typically have recesses at their upper and lower edges arranged to receive the carrying and guiding bars to enable carrying and guiding of the heat transfer plates.

The guiding bar may be heavy, especially if it is relatively long which may be the case with plate heat exchangers containing a large number of heat transfer plates. The weight of the guiding bar may cause it to be deformed, i.e. to bend or sag. Also, the guiding bar may be deformed by external stress. For example, in connection with assembly and maintenance of the plate heat exchanger, the staff often stands on the guiding bar which may cause permanent or non-permanent deformation of it. Deformation of the guiding bar may render it impossible for the recesses of the heat transfer plates to receive the guiding bar, and thus impossible for the heat transfer plates to engage with the guiding bar. This may affect the guiding of the heat transfer plates and result in non-proper plate alignment, which in turn may cause malfunctioning of the plate heat exchanger. Further, if the guiding bar is non-permanently deformed due to the staff standing on it such that an "overlap" between the guiding bar and one or more of the heat transfer plates is non-existent, problems may arise when the staff steps down and the guiding bar springs back, if the recess of one or more of the heat transfer plates is displaced in relation to the guiding bar.

### SUMMARY

An object of the present invention is to provide a plate heat exchanger that solves the above deformation problem. The basic concept of the invention is to provide support means for supporting the guiding bar from below so as to prevent deformation of the guiding bar. The heat exchanger for achieving the object above is defined in the appended claims and discussed below.

A plate heat exchanger according to the invention comprises first and second end plates, a lower bar extending from the first end plate towards the second end plate, and a pack of heat transfer plates. The pack of heat transfer plates is arranged between the first and second end plates and extends above the lower bar. The plate heat exchanger is characterized in that the lower bar comprises a groove having a length axis which extends parallel to a longitudinal direction of the lower bar, and a depth axis extending perpendicular to the length axis. The plate heat exchanger further comprises a support foot. An upper portion of the support foot is being arranged to be received in the groove. A lower portion of the support foot is being arranged to extend from the lower bar and contact the ground to keep the lower bar at a distance from the ground. The upper portion of the support foot is arranged to be slidable in the groove along the length axis to enable adjustment of a position of the support foot along the lower bar.

The plate heat exchanger may further comprise an upper bar extending from the first end plate towards the second end plate, and the heat transfer plates may extend between the upper and lower bars. Then, just like the above described carrying bar, the upper bar may be arranged to carry the heat transfer plates and possibly also the second end plate. Further, just like the above described guiding bar, the lower bar may be arranged to guide the heat transfer plates and possibly also the second end plate. However, instead, the lower bar could be arranged to carry or partly support the heat transfer plates and possibly the second end plate. In such a case, the upper bar could be possibly be dispensed with.

The first and second end plates may be similar to the above referenced frame and pressure plates in that the lower bar is attached to the first end plate and the second end plate is movable in relation to the first end plate along the lower bar.

An upper bar could extend from an upper portion of the first end plate and the lower bar could extend from a lower portion of the first end plate. Further, the upper and lower bars could extend essentially horizontally and parallel to each other. Further, the upper and lower bars could extend past the second end plate and to a support column.

The support foot is thus arranged to engage with the ground at one end and with the lower bar at an opposite end so as to maintain a certain distance between the lower bar and the ground, which distance may be determined by a height of the lower portion of the support foot. Thereby, the support foot supports the lower bar and prevents deformation of it.

Since the position of the support foot along the lower bar is adjustable, the location of the support foot can be optimized to the specific conditions, such as the size of the plate heat exchanger. As an example, a plate heat exchanger containing many heat transfer plates may have an optimum support foot position that is arranged at a larger distance from the first end plate than a plate heat exchanger containing relatively few heat transfer plates. Thus, one and the same lower bar and support foot may be used for different plate heat exchangers.

The groove may extend along the complete, or only one or more portions of, the lower bar. Further, the plate heat exchanger may comprise more than one support foot, which is beneficial especially for plate heat exchangers comprising many heat transfer plates and thus a long lower bar.

Either the complete or only portions of the heat transfer plates extend above the lower bar. Further, if an upper bar is present, either the complete or only portions of the heat transfer plates extend below the upper bar. Accordingly, the plate heat exchanger may be such that the lower bar comprises a lower part comprising the groove, and an upper part, and the heat transfer plates each comprises a recess at a lower edge receiving the upper part of the lower bar, the lower and upper parts of the lower bar extending in parallel. Then, only portions of the heat transfer plates extend above the lower bar while other portions of the heat transfer plates extend on opposite sides of the lower bar. Such an embodiment renders it possible for the upper part of the lower bar to guide and align the heat transfer plates, while the lower part may be optimized for other purposes, such as engagement with the first end plate and/or giving the lower bar required strength and size.

The upper and lower parts of the lower bar may be integrally formed which may reduce the number of articles of the plate heat exchanger. Alternatively, the upper and lower parts of the lower bar may separately formed which may enable different materials and manufacturing techniques of the upper and lower parts, and possibly retrofitting of existent plate heat exchangers, as will be further discussed below. Then, the lower part of the lower bar may comprise a cavity, depression, void, recess, notch etc. for receiving the upper part of the lower bar, which may facilitate retro-fitting. Such a cavity may extend parallel to the longitudinal direction of the lower bar.

The upper part of the lower bar may come into contact with the heat transfer plates, and possibly also with the second end plate. This contact may damage the upper part of the lower bar, especially if it is made of a less resistant material and/or if the heat transfer and second end plates scrape against it, which may happen in connection with opening and closing of the plate heat exchanger. Therefore, to protect the lower bar, the heat exchanger may further comprise a protecting sheet which at least partly covers the upper part of the lower bar.

The groove of the lower bar can be provided in different locations. According to one embodiment, it is provided at a side of the lower bar arranged to face the ground, which enables an mechanically straight-forward construction of the plate heat exchanger.

The upper portion of the support foot and the groove of the lower bar may, along the complete or only one or more portions of the groove, be arranged to interlock in a direction parallel to the depth axis of the groove, so as to prevent separation of the support foot from the lower bar in said direction. Here, the complete support foot is referred to, which means that this embodiment does not exclude that details of the support foot may be separated from the lower bar in said direction. This embodiments prevents unintentional disconnection of the support foot from the lower bar, for example in connection with transportation of the plate heat exchanger. As will be further described below, such an embodiment may facilitate locking of a position of the support foot.

The upper portion of the support foot and the groove may, along the complete or only one or more portions of the groove, be arranged to interlock in a rotational direction, so as to prevent rotation of the upper portion in relation to the lower bar about, i.e. in a direction perpendicular to, the depth axis. Here, the complete upper portion of the support foot is referred to, which means that this embodiment does not exclude that details of the upper portion may be rotated in relation to the lower bar. As will be further described below, such an embodiment may facilitate adjustment of the height of the lower portion, and/or locking of a position, of the support foot.

The support foot may comprise a means for locking the position of the support foot along the lower bar, which may render it possible to make sure that the support foot remains where desired and that the plate heat exchanger stands stable on the ground.

The height of the lower portion of the support foot may be adjustable so as to enable adjustment of the distance between the lower bar and the ground. This may render it possible to use one and the same lower bar and support foot for different plate heat exchangers.

The support foot may comprise a head and a threaded shaft arranged to engage with the head, wherein the head and an upper part of the threaded shaft are arranged to be comprised in the upper portion of the support foot, a lower part of the threaded shaft is arranged to be comprised in the lower portion of the support foot, and the head is arranged to engage with inner walls of the lower bar defining the groove to keep the lower bar at said distance from the ground. This embodiment enables a mechanically straight-forward construction of the plate heat exchanger. The head may be formed as a threaded nut, or the head and the threaded shaft may be integrally formed as a bolt with a head.

The support foot may further comprise a nut arranged to receive the treaded shaft and be comprised in the lower portion of the support foot. The nut may function as the above mentioned means for locking and enable locking of a position of the support foot in relation to the lower bar.

A portion of the lower bar defining an outer portion of the groove may be arranged to be clamped between the head and the nut for locking the position of the support foot along the lower bar and parallel to the depth axis of the groove. This may render it possible to make sure that the support foot remains where desired and that the plate heat exchanger stands stable on the ground.

The lower part and/or the upper part of the lower bar may be at least partly extruded. Thereby, the lower part and/or the upper part of the lower bar may be given a complex design adapted to specific functions, such as an outer appearance adapted to, and/or holes for engagement with, other components of the plate heat exchanger.

Still other objectives, features, aspects and advantages of the invention will appear from the following detailed description as well as from the drawings.

### BRIEF DESCRIPTION OF THE DRAWINGS

The invention will now be described in more detail with reference to the appended schematic drawings, in which
Fig. 1 schematically illustrates, in perspective, a plate heat exchanger,
Fig. 2 schematically illustrates a cross section through a lower bar, and a support foot, of the plate heat exchanger according to Fig. 1,
Fig. 3 is a schematic plan view of a heat transfer plate illustrating its engagement with the lower bar and an upper bar of the plate heat exchanger of Fig. 1, and
Fig. 4 schematically illustrates a cross section through a lower bar, and two support feet, of a plate heat exchanger according to another embodiment.

### DETAILED DESCRIPTION

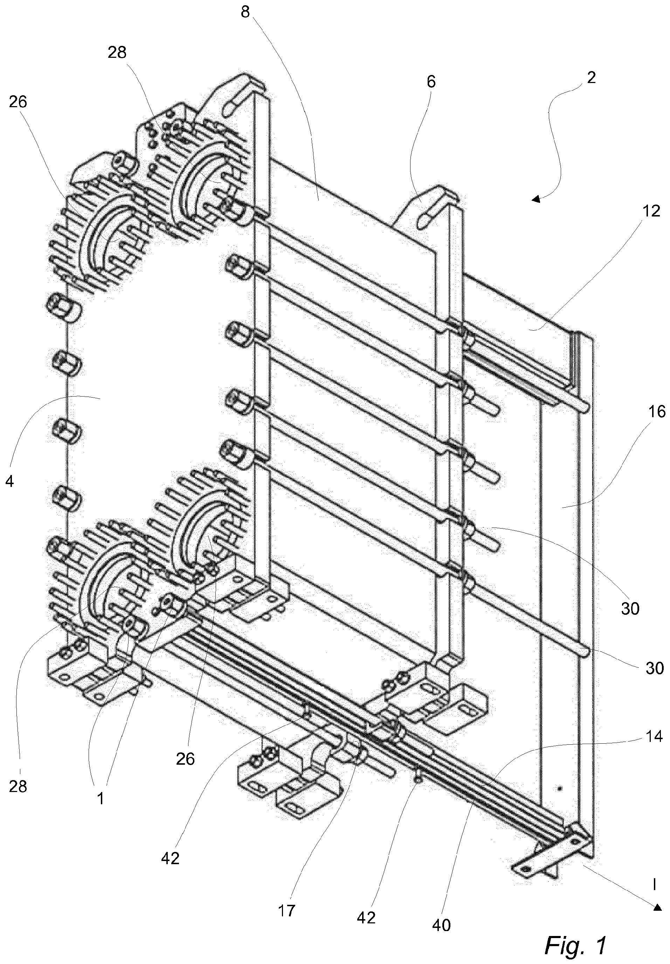

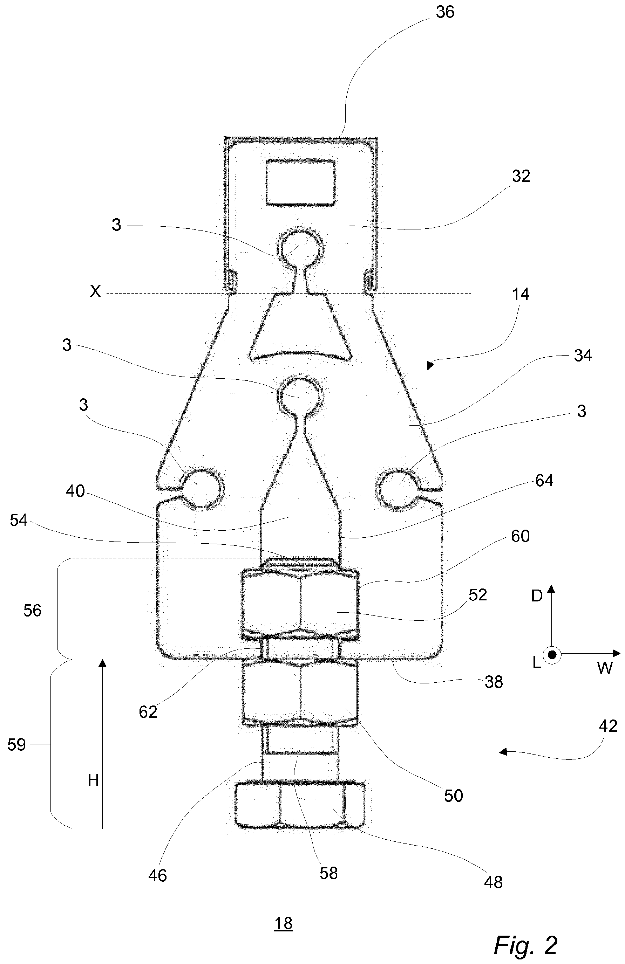

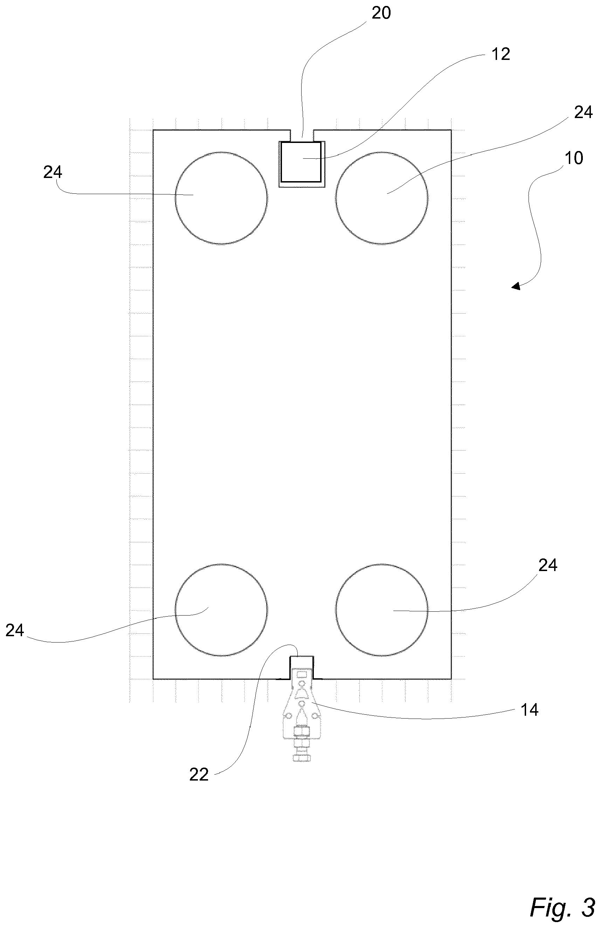

With reference to Figs. 1, 2 and 3 a gasket plate heat exchanger 2 is illustrated. It comprises a first end plate in the form of a frame plate 4, a second end plate in the form of a pressure plate 6 and a pack 8 of corrugated (not illustrated) heat transfer plates 10 (Fig. 3) arranged aligned between the parallel frame and pressure plates 4 and 6, respectively. The heat exchanger further comprises an upper carrying bar 12 of stainless steel having a rectangular cross section, a lower guiding bar 14 ("lower bar" in the claims) which will be described in more detail later, and a support column 16. The support column 16 and the frame plate 4 are arranged to be secured to the to the ground 18 (Fig. 2) and extend in parallel therefrom at a distance from each other, with the pressure plate 6, which is supported by the ground, movably arranged in between. The carrying bar 12 is at a first end attached to an upper portion of the frame plate 4 and at a second end attached to an upper part of the support column 16. Similarly, the guiding bar 14 is at a first end attached to a lower portion of the frame plate 4 and at a second end attached to a lower portion of the support column 16. The attachment of the guiding bar to the frame plate and the support column is made by means of headed threaded bolts 1 extending through the frame plate and support column, respectively, and further screwed into threaded holes 3 formed in the guiding bar 14. The carrying bar is attached in a similar way.

The pressure plate 6 comprises a recess (not visible) in an upper portion and a recess 17 in a lower portion. Similarly, each of the heat transfer plates 10 comprises a recess 20 in an upper portion and a recess 22 in a lower portion. The recesses extend through the plates perpendicular to respective main extension planes of the plates. The carrying bar 12 passes through the recesses 20 of the heat transfer plates 10, as illustrated in Fig. 3, and through the recess in the upper portion of the pressure plate 6. As is clear from Fig. 3, the heat transfer plates 10 and the carrying bar 12 interlock in a vertical direction such that the heat transfer plates hang from the carrying bar. Further, the guiding bar 14 passes through the recesses 22 of the heat transfer plates 10 and the recess 17 of the pressure plate 6 with a clearance such as to enable no plate-bar contact.

In the plate heat exchanger 2, the heat transfer plates 10 are separated from each other by gaskets (not shown). The heat transfer plates together with the gaskets form parallel channels arranged to alternately receive two fluids for transferring heat from one fluid to the other. To this end, a first fluid is arranged to flow in every second channel and a second fluid is arranged to flow in the remaining channels. The fluids enter and exit the channels via port holes 24 of the heat transfer plates 10 communicating with fluid inlets 26 and fluid outlets 28 of the plate heat exchanger 2. For the channels to be leak proof, the heat transfer plates must be pressed against each other whereby the gaskets seal between the heat transfer plates 10. To this end, the plate heat exchanger 2 comprises a number of tightening means 30, in the form of pairwise cooperating bolts and nuts, arranged to press the frame and pressure plates 4 and 6, respectively, towards each other.

The design and function of gasketed plate heat exchangers are well-known and will not be described in detail herein.

With reference especially to Fig. 2, the guiding bar 14 comprises an upper part 32 and a lower part 34 which are integrally formed by extrusion of aluminium. Dashed line X illustrates a borderline between the upper and lower parts 32 and 34. As is clear from Fig. 3, the upper part 32 of the guiding bar is received in the recesses 22 of the heat transfer plates 10. Aluminum is a relatively soft metal. The heat transfer plates, or more particularly edges of them defining the recesses 22, may come into contact with the upper part 32 of the guiding bar 14, and primarily opposite vertical sides thereof, during alignment of the heat transfer plates and/or when the heat transfer plates are moved along the guiding bar in connection with mounting and dismounting of the plate heat exchanger. To prevent that the guiding bar 14 is damaged by this contact with the heat transfer plates 10, the upper part 32 is covered by a protecting sheet 36 of stainless steel which is more wear resistant than aluminum.

The lower part 34 of the guiding bar 14 comprises, at a side 38 arranged to face the ground 18, a groove 40. The groove 40, which has perpendicular length and depth axes L and D, respectively, extends along the complete guiding bar 14, parallel to a longitudinal direction I thereof (Fig. 1), with an essentially uniform cross section.

As indicated by the names, the carrying bar 12 of the plate heat exchanger 2 is arranged to carry, while the guiding bar 14 is arranged to guide or align, the heat transfer plates 10. With reference to Fig. 1, the guiding bar extends all the way from the frame plate 4 to the support column 16. The support column should be arranged at a sufficient distance from the frame plate to allow easy mounting, dismounting and maintenance of the plate heat exchanger 2, which typically involves movement of the pressure plate 6 and the heat transfer plates 10 along the guiding (and the carrying) bar. Thus, especially in cases where the plate heat exchanger comprises a large number of heat transfer plates, the guiding bar 14 may be relatively long and thus heavy. Such a long, heavy guiding bar may bend or sag due to its weight or outer stress, which may cause displacement of the upper part of the guiding bar out from the recesses 22 of the heat transfer plates 10 and thus affect the plate alignment ability of the guiding bar.

To support the guiding bar 14 and prevent deformation of it, the plate heat exchanger 2 further comprises two support feet 42 of which one is arranged between the frame and pressure plates, 4 and 6, and the other one is arranged between the pressure plate 6 and the support column 16. The support feet 42 are essentially identical and hereinafter, one of them, and its interaction with the rest of the plate heat exchanger 2, will be further described with particular reference to Fig. 2.

The support foot 42 comprises threaded shaft 46 provided with a head 48, a locking nut 50 ("nut" in the claims) and a sliding nut 52 ("head" in the claims). The shaft 46 and the head 48 are integrally formed in the form of a bolt. The locking and sliding nuts 50 and 52 are threaded onto the bolt 46 such that the locking nut 50 is arranged between the bolt head 48 and the sliding nut 52, on a distance from the sliding nut. The sliding nut 52 and an upper part 54 of the shaft 46 are comprised in an upper portion 56 of the support foot 42, which upper portion is accommodated in the groove 40 of the guiding bar 14. The locking nut 50, a lower part 58 of the shaft 46 and the head 48 are comprised in a lower portion 59 of the support foot 42, which lower portion extends from the guiding bar 14.

As is clear from Fig. 2, the groove 40 comprises portions having different dimensions, more particularly a main portion 60 arranged to receive, and having inner walls arranged to engage with, the sliding nut 52, an outer portion 62 defining an opening of the groove and an inner portion 64, which inner and outer portions are arranged on opposite sides of the main portion. The main portion 60 has a width, measured along a width axis W, which is just slightly larger than a distance between two opposite outer plane surfaces of the sliding nut 52, which has hexagonal cross section. Thus, the sliding nut 52 cannot rotate inside the main portion 60. The outer and inner portions 62 and 64, respectively, of the groove 40, each has a width which is smaller than the width of the main portion 60 and small enough to stop the sliding nut 52 from leaving the main portion 60 in a direction parallel to the depth axis D, but large enough to allow insertion, rotation and withdrawal of the shaft 46, when the sliding nut and the shaft are orientated as illustrated in Fig. 2. Further, the main portion 60 of the groove has a depth which is just slightly larger than a height of the sliding nut 52, which restricts the mobility of the sliding nut inside the main portion 60 along the depth axis D. However, to allow adjustment of a position of the support foot 42 along the guiding bar 14, the sliding nut 52 is slidable in the main portion 60 along the length axis L of the groove 40.

As is clear from Fig. 2, the head 48 of the support foot 42 is arranged to contact the ground 18. By the shaft 46 engaging with the sliding nut 52, which interlocks with the groove portion 60 as above described, the support foot 42 keeps the guiding bar 14 on a certain distance from the ground 18, which distance is equal to a height H of the lower portion 59 of the support foot. This height H is adjustable by rotation of the head 48 and thereby the shaft 46. When the support foot 42 has been correctly positioned along the guiding bar 14 and the height H of the lower portion 59 of the support foot has been set as desired, the support foot can be locked in place by tightening the locking nut 50 against the side 38 of the guiding bar 14. Thereby, a portion of the guiding bar 14 defining the outer portion 62 of the groove 40 is clamped between the locking and sliding nuts 50 and 52 such that the position of the support foot 42 is locked both along the guiding bar 14 and parallel to the depth axis of the groove 40.

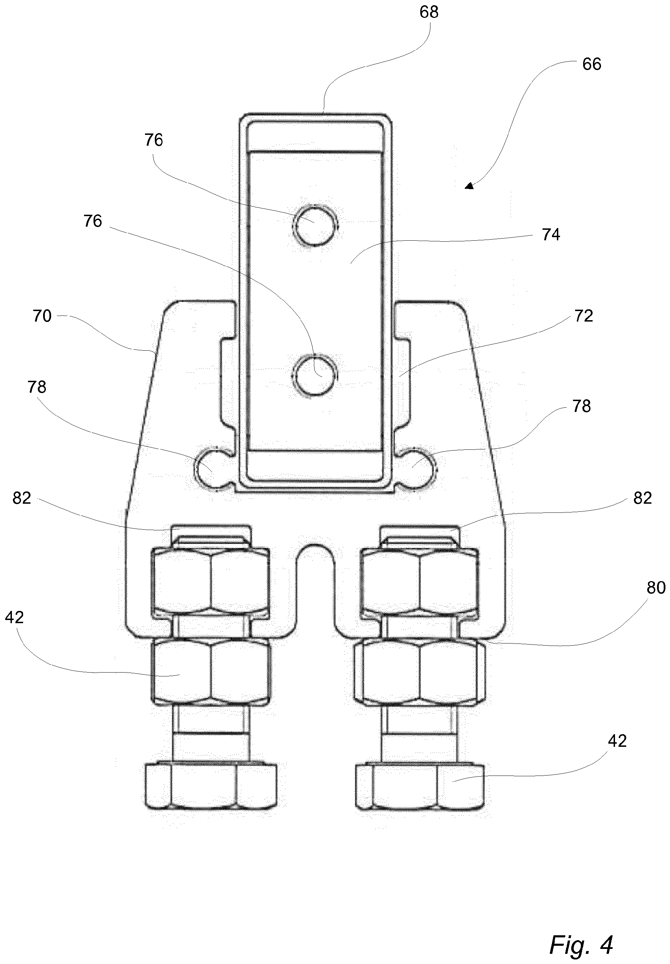

Fig. 4 illustrates a guiding bar 66 and two support feet 42 of an alternative plate heat exchanger. This alternative plate heat exchanger is similar to the above described plate heat exchanger except for as regards the design of the guiding bar and its engagement with the rest of the plate heat exchanger, and the number of, and positioning of the, support feet. Features of the alternative plate heat exchanger that are present in the plate heat exchanger 2 and described above, will not be described again below.

The guiding bar 66 comprises an upper part 68 in the form of a hollow bar of stainless steel with rectangular cross section, and a lower part 70 of extruded aluminum. The lower part 70 comprises an elongate cavity 72, which extends parallel to a longitudinal direction of the guiding bar 66, for receiving the upper part 68. Fastening plates 74 of stainless steel are welded to opposite ends of the upper part 68 of the guiding bar 66. The attachment of the guiding bar 66 to the frame plate and the support column is made by means of headed threaded bolts extending through the frame plate and support column, respectively, and further screwed into threaded holes 76 formed in the fastening plates 74 and threaded holes 78 formed in the lower part 70 of the guiding bar 66.

The lower part 70 of the guiding bar 66 comprises, at a side 80 arranged to face the ground, two parallel grooves 82 extending along the complete guiding bar 66, parallel to its longitudinal direction. To support the guiding bar 66, at least one pair of support feet 42 is provided, which support feet are essentially identical to the above described ones. The above description of the engagement between groove and support foot is valid for the engagement between the grooves 82 of the guiding bar 66 and a respective one of the support feet 42 of said at least one pair of support feet.

Thus, the guiding bar 66 comprises separately formed upper and lower parts 68 and 70, and the upper part is received in a recess formed in the lower part. It should be noted that this embodiment of the present invention may enable transformation of an existent plate heat exchanger comprising a guiding bar into a plate heat exchanger according to the invention by the provision of the lower part 70 and at least one pair of support feet 42. The upper part of the inventive guiding bar would then be the guiding bar of the existing plate heat exchanger which would be received in the cavity of the lower part 70.

Thus, by means of the present invention, the guiding bars 14 and 66 of the respective plate heat exchangers can be supported from below such as to prevent deformation of the guiding bar and any malfunctioning of the plate heat exchanger that may result from such deformation. The support is achieved by means of one or more support feet arranged in one or two (could even be more than two) grooves in the guiding bar, and extending from the guiding bar towards the ground. The number of, and positions of the, support feet may be adjusted to the features of the plate heat exchanger, such as the size and weight of the plate heat exchanger. The support feet are adjustable for adaptation to different desired distances between the guiding bar and the ground, which means that one and the same support foot and guiding bar can be used for different plate heat exchangers. The adjustability of the support feet is also advantageous if the ground is uneven and/or not perfectly flat.

The above described embodiments of the present invention should only be seen as examples. A person skilled in the art realizes that the embodiments discussed can be varied and combined in a number of ways without deviating from the inventive conception.

A plate heat exchanger according to the present invention can comprise any number of support feet, i.e. one or more.

As an example, a guiding bar comprising integrally formed upper and lower parts could comprise more than one groove, and a guiding bar comprising separately formed upper and lower parts could comprise one groove only and/or a protecting sheet.

As another example, the upper and lower parts of the guiding bar need not be of equal length as in the above described embodiments. For example, in the case of separately formed upper and lower parts, the lower part may be one or more shorter parts, arranged to be fastened or not to the frame and pressure plates, which could facilitate retrofitting of existent plate heat exchangers.

The carrying and guiding bars need not have the above described cross sections but can have any suitable cross section. For example, the holes of the guiding bar arranged for engagement with the frame plate and the support column may be more or fewer in number and differently positioned. Further, accordingly, the recesses of the heat transfer and pressure plates may have any suitable form. The recesses formed in the upper portions of the heat transfer and pressure plates could be replaced by holes such as to have the plates completely surrounding the carrying bar.

Other materials than stainless steel and aluminum, for example carbon steel, titanium and plastics, can be used in a plate heat exchanger according to the invention.

The grooves and cavities of the lower part of the guiding bar need not be formed as illustrated in the drawings but may be formed in any suitable way. Further, the groove/grooves of the lower part of the guiding bar need not be formed at the side arranged to face the ground but could for example be formed on the side/sides of the lower bar with suitably modified support foot/feet.

The frame and pressure plate may be arranged to support the guiding bar and possibly the carrying bar together, in which case a support column may be unnecessary.

The guiding bar of the plate heat exchanger illustrated in Fig. 1 has opposing ends contacting, across their complete surface, the frame plate and the support column such that the groove of the guiding bar is "closed" by the frame plate and the support column. Thus, the sliding nuts of the two support feet are "trapped" in the groove. Naturally, the frame plate and the support column could instead be arranged with suitable recesses so as to not completely cover the ends of the guiding bar, more particularly, so as to not close the guiding bar groove. Such a construction would allow removal/addition of sliding nuts, and thus support feet, from/to the plate heat exchanger without disassembly.

In the case of a guiding bar comprising separately formed upper and lower parts, the lower part need not comprise a cavity for receiving the upper part but it could instead be the other way around, i.e. that the upper part comprises a cavity for receiving the lower part. The upper and lower parts could also be arranged to engage with each other in other ways. For example, the upper and lower parts could be connected to each other mechanically, such as by means of bolt and nuts, or fastened to each other by welding, gluing, etc.

The present invention could be used in connection with other types of plate heat exchangers than gasketed ones, such as semi-welded plate heat exchangers comprising a guiding bar.

It should be stressed that a description of details not relevant to the present invention has been omitted and that the figures are just schematic and not drawn according to scale. It should also be said that some of the figures have been more simplified than others. Therefore, some components may be illustrated in one figure but left out in another figure. Furthermore, it should be stressed that expressions like "upper", "lower", "vertical", "horizontal", etc., which have been chosen to describe and reflect the plate heat exchanger when this is in its normal state of operation, are used herein just to distinguish between different details of the plate heat exchanger. Thus, these expressions are in no way limiting. Finally, as used herein, when one component is said to be connected to another component, the connection may be direct as well as indirect.

## Claims

1. A plate heat exchanger (2) comprising first and second end plates (4, 6), a lower bar (14, 66) extending from the first end plate (4) towards the second end plate (6), and a pack (8) of heat transfer plates (10) arranged between the first and second end plates and extending above the lower bar, **characterized in that** the lower bar (14, 66) comprises a groove (40, 82) having a length axis (L) which extends parallel to a longitudinal direction (I) of the lower bar (14, 66), and a depth axis (D) extending perpendicular to the length axis, the plate heat exchanger further comprising a support foot (42), an upper portion (56) of the support foot (42) being arranged to be received in the groove (40, 82) and a lower portion (59) of the support foot (42) being arranged to extend from the lower bar (14, 66) and contact the ground (18) to keep the lower bar at a distance from the ground, wherein the upper portion (56) of the support foot (42) is arranged to be slidable in the groove (40, 82) along the length axis (L) to enable adjustment of a position of the support foot (42) along the lower bar (14, 66).

2. A plate heat exchanger (2) according to claim 1, wherein the lower bar (14, 66) comprises a lower part (34, 70) comprising the groove (40, 82) and an upper part (32, 68), and the heat transfer plates (10) each comprises a recess (22) at a lower edge receiving the upper part (32, 68) of the lower bar (14, 66), the lower and upper parts (34, 70, 32, 68) of the lower bar extending in parallel.

3. A plate heat exchanger (2) according to claim 2, wherein the upper and lower parts (32, 34) of the lower bar (14) are integrally formed.

4. A plate heat exchanger (2) according to claim 2, wherein the upper and lower parts (68, 70) of the lower bar (66) are separately formed.

5. A plate heat exchanger (2) according to claim 4, wherein the lower part (70) of the lower bar (66) comprises a cavity (72) for receiving the upper part (68) of the lower bar.

6. A plate heat exchanger (2) according to any of claims 2-5, further comprising a protecting sheet (36) at least partly covering the upper part (32, 68) of the lower bar (14, 66).

7. A plate heat exchanger (2) according to any of the preceding claims, wherein the groove (40, 82) of the lower bar (14, 66) is provided at a side (38, 80) of the lower bar arranged to face the ground (18).

8. A plate heat exchanger (2) according to any of the preceding claims, wherein the upper portion (56) of the support foot (42) and the groove (40, 82) are arranged to interlock in a direction parallel to the depth axis (D) of the groove, so as to prevent separation of the support foot (42) from the lower bar (14, 66) in said direction.

9. A plate heat exchanger (2) according to any of the preceding claims, wherein the upper portion (56) of the support foot (42) and the groove (40, 82) are arranged to interlock in a rotational direction, so as to prevent rotation of the upper portion (56) in relation to the lower bar (14, 66) about the depth axis (D).

10. A plate heat exchanger (2) according to any of the preceding claims, wherein the support foot (42) comprises a means (50) for locking the position of the support foot (42) along the lower bar (14, 66).

11. A plate heat exchanger (2) according to any of the preceding claims, wherein a height (H) of the lower portion (59) of the support foot (42) is adjustable so as to enable adjustment of the distance between the lower bar (14, 66) and the ground (18).

12. A plate heat exchanger (2) according to any of the preceding claims, wherein the support foot (42) comprises a head (52) and a threaded shaft (46) arranged to engage with the head, wherein the head (52) and an upper part (54) of the threaded shaft (46) are arranged to be comprised in the upper portion (56) of the support foot (42), a lower part (58) of the threaded shaft (46) is arranged to be comprised in the lower portion (59) of the support foot, and the head (52) is arranged to engage with inner walls of the lower bar (14, 66) defining the groove (40, 82) to keep the lower bar (14, 66) at said distance from the ground (18).

13. A plate heat exchanger (2) according to claim 12, wherein the support foot (42) further comprises a nut (50) arranged to receive the threaded shaft (46) and be comprised in the lower portion (59) of the support foot (42).

14. A plate heat exchanger (2) according to claim 13, wherein a portion of the lower bar (14, 66) defining an outer portion (62) of the groove (40, 82) is arranged to be clamped between the head (52) and the nut (50) for locking the position of the support foot (42) along the lower bar (14, 66) and parallel to the depth axis (D) of the groove (40, 82).

15. A plate heat exchanger (2) according to any of the preceding claims, wherein the lower bar (14, 66) is at least partly extruded.
